Europäisches Patentamt

European Patent Office

Office européen des brevets

(19)

(11) Publication number: **0 128 674**
**B1**

(12) # EUROPEAN PATENT SPECIFICATION

(45) Date of publication of patent specification: **07.01.88**

(51) Int. Cl.⁴: **F 16 H 9/20**

(21) Application number: **84303294.7**

(22) Date of filing: **16.05.84**

(54) Ratio control mechanism for a variable-ratio belt drive.

(30) Priority: **08.06.83 US 502171**

(43) Date of publication of application:
**19.12.84 Bulletin 84/51**

(45) Publication of the grant of the patent:
**07.01.88 Bulletin 88/01**

(84) Designated Contracting States:
**DE FR GB IT**

(56) References cited:
**CH-A- 301 106**
**DE-B-2 326 947**
**FR-E- 52 841**
**FR-E- 52 934**
**US-A-3 110 189**
**US-A-3 490 301**

(73) Proprietor: **GENERAL MOTORS CORPORATION**
**General Motors Building 3044 West Grand Boulevard**
**Detroit Michigan 48202 (US)**

(72) Inventor: **Chana, Howard Eugene**
**5265 Shrewsbury Drive**
**Troy Michigan 48098 (US)**
Inventor: **Stordahl, Calmer M.**
**30 Kirks Court**
**Rochester Michigan 48063 (US)**

(74) Representative: **Breakwell, John Neil Bower et al**
**GM Patent Section Vauxhall Motors Limited Luton Office (F6) P.O. Box No. 3 Kimpton Road Luton Bedfordshire LU2 OSY (GB)**

Courier Press, Leamington Spa, England.

## Description

This invention relates to a ratio control mechanism for a variable-ratio belt drive as specified in the preamble of claim 1, for example as disclosed in US—A—3 110 189.

Prior-art control mechanisms generally utilise a pair of skewable (slewable) linkage arms disposed between the pulley members and arranged to increase the effective width of one pulley while decreasing the width of the other. Other prior-art systems have utilised a linkage system of this type in conjunction with load cam mechanisms which, together with the linkage, establish separate forces on each pulley.

The linkages in such systems establish the basic drive ratio, and the cams add to the belt tension forces. These systems generally do not permit automatic ratio change during operation, but require a manual change to the skewable linkage mechanism, and in some instances adjustment of the pivot point of the linkage mechanisms.

Other prior-art control mechanisms utilise a load cam operable on one pulley and a bias spring operable on the other. Such mechanisms provide an automatic ratio change which is responsive to the torque-sensitive portion of the system as balanced against a spring bias, but the systems do not have any mechanical interconnection between the pulleys.

In the ratio control mechanism disclosed in the said US—A—3 110 189, each cam means, in addition to applying a torque-dependent axial force to its associated pulley, also applies torque reaction to a respective rotary piston. The two rotary pistons have hydraulic connections to a distribution slide valve that is subject to the control of a manual lever, and the pistons act as turning devices for the respective cam means, in a direction opposite to the pitch direction of such cam means, to permit the belt of the variable-ratio drive to maintain the axial forces prevailing at the input and output pulleys in equilibrium.

The present invention is concerned with a ratio control system which, in addition to permitting automatic ratio change during operation, provides for the balancing of the squeeze forces on the movable pulley members by the use of a mechanical linkage, for maintenance of the required belt tension and force balance.

To this end, a ratio control mechanism in accordance with the present invention is characterised by the features specified in the characterising portion of claim 1.

The ratio selector means is connected to one of the pulley and load cam structures (that is, the torque-sensitive cam means), to add to or substract from the axial force imposed thereon, and thereby maintain an axial load on the pulleys which will establish the required belt tension and force balance.

The belt tension is important in that it is proportional to the torque-transmitting capacity of the pulley system. Given the torsional loads on the input and output shafts, the desired transmission ratio between the pulleys is readily established by superimposing a control force so as to establish the required balancing of forces at the torque transmission level which is present.

Preferably the mechanical force-balancing means interconnects the load cam structures associated with the input and output shafts respectively, and comprises a floating linkage for transmitting the higher of the load cam axial forces to both pulleys.

In a preferred embodiment of a ratio control mechanism in accordance with the present invention, a load-sensitive cam structure is connected between each of the input and output shafts and their respective pulleys to apply an axial load to the pulleys in proportion to the torque transmitted by the shaft, and also the load-sensitive cam structures are interconnected by a linkage and a preload spring mechanism which establish a minimum axial load on both pulleys and permit a predetermined amount of axial movement to compensate for geometric error occurring between the extreme ends of the ratio range. The linkage is operable to transmit the higher of the axial forces established by the load cam structures, and the control mechanism also includes a ratio selector operatively connected to a movable member of one of the pulleys for adding to or subtracting from the axial load imposed thereon by the load cam structures.

In the drawings:

Figure 1 is a fragmentary longitudinal sectional view, with parts in elevation, of a preferred embodiment of a transmission having a control mechanism in accordance with the present invention; and

Figure 2 is a schematic representation of the control mechanism shown in Figure 1.

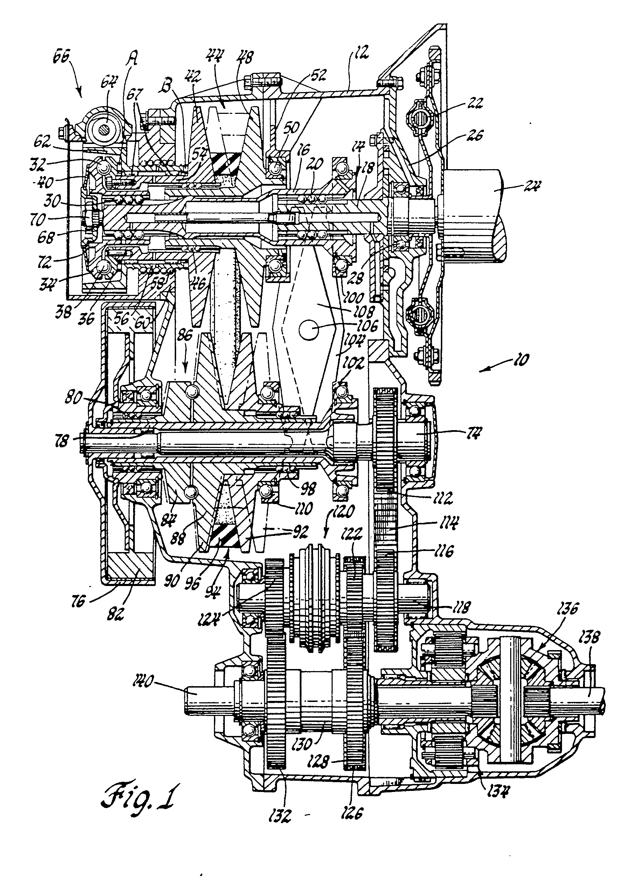

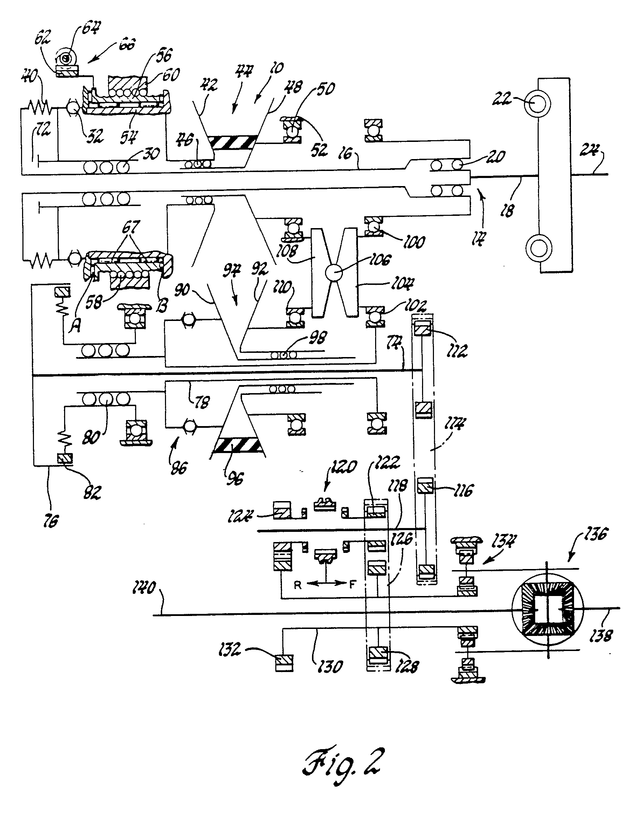

With reference now to the drawings, there is shown in Figure 1 a variable belt drive transmission, generally designated 10, for a vehicle, the transmission having a multi-piece transmission housing 12. Like reference numerals are used to designate like components in Figures 1 and 2, and the following description will be concerned primarily with Figure 1, although the schematic representation of Figure 2 will be seen to include less detail, which should facilitate reference to the main elements.

The transmission 10 includes an input shaft 14 which has two shaft portions 16 and 18 interconnected by a ball spline 20. The shaft portion 18 is connected by way of a vibration damper 22 to a prime mover drive shaft 24. The shaft portion 18 is rotatably supported in an end cover 26 by a bearing 28, and the end cover 26 in itself secured to the transmission housing 12.

The shaft portion 16 is connected by way of a ball spline 30 to an input load cam structure (input torque-sensitive cam means) 32. The input load cam structure 32 has a pair of cam races 34 and 36 with which a plurality of balls 38 co-operate, each ball 38 contacting opposed cam notches in facing surfaces of the respective cam races 34 and 36, as shown schematically in Figure 2. The cam races 34 and 36 are urged towards each other by a preload spring 40. The cam race 34 is connected to the ball spline 30, and the cam race 36 is connected to one sheave (movable member) 42 of an input pulley, generally designated 44. The sheave 42 is connected by means of a ball spline 46 to the other sheave 48 of the input pulley 44. The sheave 48 is rotatably supported by a bearing 50 that is secured in a wall member 52 formed integrally with, or otherwise connected to, the transmission housing 12. The sheave 48 is thereby axially positioned relative to the transmission housing 12.

The sheave 42 includes a sleeve portion 54 which is secured to the cam race 36 and surrounded by a ball nut 56. The ball nut 56 is connected by way of a plurality of balls 58 to a threaded member 60 that is secured in the transmission housing 12. The ball nut 56 has integrally formed therewith, or otherwise secured thereto, a worm gear 62 which meshes with a worm 64 and co-operates therewith to provide a ratio selector means 66. The ball nut 56 is disposed between the cam race 36 and the sheave 42, and is grounded to the transmission housing 12 in such a manner that rotation of the worm 64 can result in the selective imposition of various loads either on the sheave 42 through a bearing B or on the cam race 36 through a bearing A.

The input load cam structure 32 senses the torque transmitted by the input shaft 14, and is capable of thereby imposing an axial load on the input pulley 44 in proportion to the torque transmitted. If the drive ratio selector mechanism 66 is operated to impose a load on the sheave 42, such load will be in addition to the axial load of the cam structure 32. If the ratio selector means 66 is operated to impose an axial load on the cam race 36, this load will in effect be subtracted from the load imposed by way of the input load cam structure 32 on the pulley 44. The pulley sheave 42 is supported in the housing 12 by bearings 67.

The preload spring 40, as seen in Figure 1, is connected to the shaft portion 16 by means of a washer 68 and a fastener 70. The preload spring 40 urges the shaft portion 16 leftwardly and the cam race 34 rightwardly so that a gap 72 is developed therebetween.

The housing 12 also rotatably supports a pulley output shaft 74 to which is drivingly connected a clutch drum 76. Rotatably supported on the pulley output shaft 74 is a sleeve shaft 78 which is drivingly connected by way of a ball spline 80 to a centrifugal clutch 82. The sleeve shaft 78 is also connected to a cam race 84 which is a component of an output load cam (output torque-sensitive cam means) 86. The output load cam 86 has another cam race 88 which is formed integrally with, or otherwise secured to, a sheave 90. The sheave 90 co-operates with a sheave 92 to form an output pulley, generally designated 94. The output pulley 94 is drivingly connected to the input pulley 44 by means of a belt 96. The sheaves 90 and 92 are interconnected by a ball spline 98 permitting relative axial movement of the sheaves 90 and 92.

The shaft portion 16 has secured thereto a bearing 100, and the sleeve shaft 78 has secured thereto a bearing 102. These bearings 100 and 102 are contacted by a link 104 which is pivotally connected by means of a pin 106 to a link 108. The link 108 is in contact with the transmission housing 12 by way of the wall member 52 and is in contact with the sheave 92 by way of a bearing 110.

The preload of the spring 40 acts on the shaft portion 16 to urge it leftwardly, such that the upper ends of the links 104 and 108 will be urged together, thereby resulting in separation of the lower ends of the links 104 and 108.

As is best seen in Figure 1, the separation of the lower ends of the links 104 and 108 results in axial forces on the sheaves 90 and 92 urging them together. The axial force on the bearing 102 acts on the sheave 90 by way of the sleeve shaft 78 and the output load cam 86, whereas the load on the bearing 110 acts directly on the sheave 92. The output load cam 86 is sensitive to the torque transmitted to the pulley output shaft 74. The torque on the load cam 86 is such that an axial force is imposed between the sheave 90 and the bearing 102. This axial force urges the sheaves 90 and 92 towards each other, and simultaneously imposes the same axial load on the bearings 102 and 110. The axial load on the bearing 102 is transmitted by way of the link 104 to the bearing 100. From the bearing 100, this axial force is imposed on the input load cam 32, and therefore on the sheave 42 of the input pulley 44. The sheave 48 is axially loaded by means of the belt 96 and reacts against the bearing 50.

The axial force generated by the input load cam structure 32 is likewise imposed on the output load cam 86. It is thus evident that irrespective of which of the load cams 32 and 86 generates the higher axial force, that higher axial force will be imposed on both the input pulley 44 and the output pulley 94, but altered on the input pulley 44 by the ratio selector means 66.

It is preferred for underdrive and overdrive ratios selected in conformity with the present invention to be provided by a 1:1 linkage system utilising the links 104 and 108. However, should a ratio other than 1:1 be desired between the load cam structures for other ratios and cam loadings, it will be evident that the appropriate force and displacement ratios can be obtained by changing the ratio in the links 104 and 108.

The forces transmitted by the output load cam 86 and the input load cam structure 32 must pass through the preload spring 40. When the load of the preload spring 40 is overcome, the gap 72 will be closed such that there will be solid contact between the shaft portion 16 and the cam race 34.

In general practice, the preload of the spring 40 will be overcome during most drive conditions, such that the gap 72 will not generally exist. However, the gap 72 will be effective to permit adjustment within the system to compensate for a geometric error which occurs in a belt drive when going from a full underdrive ratio through a 1:1 direct-drive ratio to a full overdrive ratio. During the underdrive ratio, the belt 96 is at a minimum diameter in the input pulley 44 and at a maximum diameter in the output pulley 94. At a maximum overdrive condition the sheave 42 will have moved rightwardly such that the belt 96 will move outwardly to a maximum diameter on the input pulley 44 and inwardly to a minimum diameter on the output pulley 94. Due to the differences in wrap angle on the pulleys, it is necessary to compensate for the fixed belt length.

At the maximum underdrive ratio the input load cam will be bottomed out, since the output torque will be highest, whereas at the maximum overdrive ratio the output load cam will be bottomed out, since the input torque will be highest. The gap 72 co-operates with the load cams to provide the required movement to compensate for the geometric error which will occur during a change from full underdrive to full overdrive.

The pulley output shaft 74 has connected thereto a sprocket 112 to which is drivingly connected a toothed chain 114. The chain 114 meshes with a sprocket 116 which is drivingly connected to an idler shaft 118. The idler shaft 118 has drivingly connected thereto a conventional mechanical synchronized clutch assembly 120 which is selectively operable to connect a forward sprocket 122 or alternatively a reverse gear 124 to the idler shaft 118. The forward sprocket 122 is drivingly connected by means of a toothed chain 126 to a drive sprocket 128 which is drivingly connected to a sleeve shaft 130. The reverse gear 124 meshes with a reverse gear 132 which is also drivingly connected to the sleeve shaft 130. The sleeve shaft 130 is connected to a planetary final reduction drive 134, which in turn is drivingly connected to a differential gear assembly, generally designated 136. The differential gear assembly 136 is drivingly connected to a pair of axle shafts 138 and 140 which are adapted to drive vehicle wheels, not shown, in a conventional manner.

The forward-reverse drive arrangement provided by the synchronized clutch assembly 120, the sprockets 122 and 128, and the gears 124 and 132 is a conventional drive arrangement the operation of which will be evident to those familiar with the power transmission art, as will be the operation of the planetary reduction drive 134 and the differential gear assembly 136.

The output pulley 94 is drivingly connected to the pulley output shaft 74 by means of the load cam 86 and the centrifugal clutch 82. Thus, when the vehicle is stationary and the input speed is low, the pulley 94 will be disconnected from the pulley output shaft 74. During this condition, the ratio selector means 66 will generally be conditioned for maximum underdrive, such that the pulley 94 will be rotating much more slowly than the pulley 44. However, as the speed of the drive shaft 24 is increased, for example as a throttle pedal of the vehicle is depressed to increase the output speed of the primer mover (which may be an internal combustion engine), both the input pulley 44 and the output pulley 94 will increase in speed. As the output pulley 94 increases in speed, the centrifugal clutch 82 will begin to engage the clutch drum 76, thereby inducing rotation of the pulley output shaft 74 and, by way of the toothed chain 114 and the drive gearing, the axle shafts 140 and 138. This will impose a torque load on the pulley output shaft 74, resulting in an increase in the axial force transmitted by the output load cam 86.

In the following description, it will be assumed that the prime mover (which is not shown) is operated at maximum torque, assumed to be 149.14 Nm (110 pounds feet). It is further assumed that the maximum underdrive ratio is 2.37:1 and the maximum overdrive ratio is 0.422:1, that a specific coefficient of friction exists, and that a desired traction safety factor is maintained. The axial force generated by the input load cam structure 32 will be equal to 19.8 times the torque on the input shaft, and the axial force generated by the output load cam 86 will be 24.68 times the torque on the pulley output shaft 74. During these conditions of maximum underdrive, the input load cam structure 32 generates an axial force of 9688N (2178 pounds), whereas the output load cam 86 generates an axial force of 28619N (6434 pounds). Since the ouput cam force is higher, this load acts by way of the links on both pulleys. During this condition, an axial force of 26822N (6030 pounds) at the input pulley 44 is required for equilibrium. The difference of 1797N (404 pounds) is obtained from the drive ratio selector mechanism 66 which, through the ball nut 56, imposes this force on the cam race 36, so subtracting this force from the input pulley squeeze.

To maintain the maximum overdrive ratio of 0.422:1 at the maximum input torque of 149.14 Nm (110 pounds feet), the input load cam structure generates 9688N (2178 pounds), whereas the output load cam generates 5097N (1146 pounds). Under these conditions, the equilibrium force balance is 18113N (4072 pounds) on the input pulley and 9688N (2178 pounds) on the output pulley. To obtain this balance, an additional force of 8424N (1894 pounds) must be added to the squeeze force on the input pulley 44 through the ratio selector means 66. Thus, the ratio selector means 66 operates from 1797N (404 pounds) in a leftward direction at maximum underdrive to 8424N (1894 pounds) in a rightward direction at maximum overdrive. To adjust the drive ratio from one extreme to the other, it is simply necessary to rotate the worm 64 such that the balance force imposed is adjusted accordingly. At a 1:1 drive, the input load cam structure will supply a force of 9688N (2178 pounds) and the output load cam a force of 12072N (2714 pounds). The 12072N (2714 pounds) force will be imposed on both the output pulley 94 and the input pulley 44. To maintain equilibrium at this condition, however, a force of 12752N (2867 pounds) is required at the input pulley. Accordingly, a force of 680N (153 pounds) is added to the input pulley 44 by the ratio selector means 66.

The control of the ratio selector means 66 at the desired position will result in the desired drive ratio between the pulleys and the appropriate balanced axial loads on the input and output pulleys. It will be evident from the above description that the links 104 and 108 are fixed at only one end, that is, the end of the link 108 which abuts the wall member 52 of the housing 12. The rest of the linkage, including the pin 106, is free-floating. This permits substantial alignment of the belt 96 during ratio changes from maximum underdrive to maximum overdrive.

The worm 64 of the ratio selector means 66 can be controlled by any of the well-known control mechanisms, such as an electric motor or hydraulic motor. When an electrical or hydraulic control is used for the worm 64, various control parameters including engine, speed, engine throttle and output speed can be utilized.

If desired, the worm 64 could be replaced by a rack, such that linear movement of the rack would result in rotary movement of the worm gear 62.

## Claims

1. A ratio control mechanism for a variable-ratio belt drive in which each pulley (44, 94) of a belt and pulley system (10) has at least one movable member (42, 90, 92), the belt and pulley system has an input shaft (14) and an output shaft (74), output torque-sensitive cam means (86) is disposed between the output shaft (74) and a movable member (90) of one pulley (94) for applying an axial force proportional to the output torque to the one pulley to control belt (96) tension, input torque-sensitive cam means (32) is disposed between the input shaft (14) and a movable member (42) of another pulley (44) for applying an axial force proportional to the input torque of the said other pulley (44) to control belt (96) tension, and ratio selector means (66) is operable to select ratios by causing axial forces further to the torque-induced axial forces to be applied to the respective cam means (86 and 32), characterised in that the ratio selector means (66) comprises mechanical means operable to apply an axial force in addition to or subtracted from the axial force on the said other pulley (44), and that mechanical force-balancing means (104, 106, 108) is provided for correlating axial movement of movable members (42 and 92) of the respective pulleys (44 and 94), for balancing the forces on both pulleys (44 and 94) when the ratio selected is achieved and the belt (96) tension is controlled.

2. A ratio control mechanism according to claim 1, characterised in that the mechanical force-balancing means (104, 106, 108) comprises force-transmitting link means, and that preload spring means (40) and the force-transmitting link means (104, 106, 108) interconnect the said output and input torque-sensitive cam means (86 and 32) for establishing an initial axial force in the belt and pulley system (10).

3. A ratio control mechanism according to claim 2, characterised in that the said pulleys comprise an input pulley (44) and an output pulley (94) with the drive ratio between the input and output pulleys (44 and 94) determined in part by the axial forces on the said pulleys, the input shaft (14) is drivingly connected to the input pulley (44) and the output shaft (74) is drivingly connected to the output pulley (94), the output torque-sensitive cam means (86) and the input torque-sensitive cam means (32) are effective to establish a belt (96) tension at the output pulley (94) and the input pulley (44) respectively, the force-transmitting link means (104, 106, 108) is effective to apply the greater of the axial forces to both pulleys (94 and 44), and the force applied by the ratio selector means (66) in addition to or subtracted from the force on one (44) of the pulleys (94 and 44) is maintained proportional to the torque levels at the respective pulleys (94 and 44) such that proper belt tension is maintained.

## Patentansprüche

1. Mechanismus zur Steuerung des Übersetzungsverhältnisses für ein regelbares Riemengetriebe mit folgender Ausgestaltung:
— jedes Scheibenrad (44, 94) eines Riemen- und Scheibenradsystems (10) weist mindestens ein bewegbares Teil (42, 90, 92) auf,
— das Riemen- und Scheibenradsystem weist eine Eingangswelle (14) und eine Ausgangswelle (74) auf,
— eine Ausgangsdrehmoment-empfindliche Nockenvorrichtung (86) ist zwischen der Ausgangswelle (74) und einem bewegbaren Teil (90) des einen Scheibenrads (94) angeordnet und übt auf das eine Scheibenrad eine zum Ausgangsdrehmoment proportionale Axialkraft aus, um die Spannung des Riemens (96) zu regeln,
— eine Eingangsdrehmoment-empfindliche Nockenvorrichtung (32) ist zwischen der Eingangswelle (14) und einem bewegbaren Teil (42) eines anderen Scheibenrads (44) angeordnet und übt eine zum Eingangsdrehmoment des anderen Scheibenrads (44) proportionale Axialkraft aus, um die Spannung des Riemens (96) zu regeln,
— mit einer Übersetzungswahlvorrichtung (66) werden Übersetzungsverhältnisse ausgewählt, indem zusätzlich zu dem Drehmoment-induzierten Axialkräften Axialkräfte bewirkt werden, die auf die entsprechenden Nockenvorrichtungen (86 und 32) aufgebracht werden,
dadurch gekennzeichnet, daß die Übersetzungswahlvorrichtung (66) eine mechanische Vorrichtung umfaßt, die eine Axialkraft ausüben kann, die zu der Axialkraft auf das andere Scheibenrad (44) addiert oder von ihr subtrahiert wird, und daß eine mechanische Kraft-Ausgleichsvorrichtung (104, 106, 108) vorgesehen ist, die die Axialbewegung der bewegbaren Teile (42 und 92) der entsprechenden Scheibenräder (44 und 94) derart in eine Wechselbeziehung bringt, daß die Kräfte an beiden Scheibenrädern (44 und 94) ausgeglichen werden, wenn das ausgewählte Übersetzungsverhältnis erreicht und die Spannung des Riemens (96) geregelt ist.

2. Mechanismus zur Steuerung des Übersetzungsverhältnisses nach Anspruch 1, dadurch gekennzeichnet, daß die mechanische Kraft-Ausgleichsvorrichtung (104, 106, 108) eine kraftübertragende Verbindungsvorrichtung enthält, und daß ein vorgespanntes Federelement (40) und die kraftübertragende Verbindungsvorrichtung (104, 106, 108) die Ausgangs- und Eingangsdrehmoment-empfindlichen Nockenvorrichtungen (86 und 32) untereinander verbinden, um eine anfängliche Axialkraft im Riemen- und Scheibenradsystem festzulegen.

3. Mechanismus zur Steuerung des Übersetzungsverhältnisses nach Anspruch 2, dadurch gekennzeichnet, daß die Scheibenräder ein Eingangsscheibenrad (44) und ein Ausgangsscheibenrad (94) umfassen, wobei das Antriebs-Übersetzungsverhältnis zwischen den Eingangs- und Ausgangsscheibenrädern (44 und 94) teilweise durch die Axialkräfte auf die Scheibenräder bestimmt ist, daß die Eingangswelle (14) mit dem Eingangsscheibenrad (44) und die Ausgangswelle (74) mit dem Ausgangsscheibenrad (94) treibbar verbunden sind, daß die Ausgangsdrehmoment-empfindliche Nockenvorrichtung (86) und die Eingangsdrehmoment-empfindliche Nockenvorrichtung (32) eine Spannung des Riemens (96) an dem Ausgangsscheibenrad (94) beziehungsweise an dem Eingangsscheibenrad (44) festlegen, daß die kraftübertragende Verbindungsvorrichtung (104, 106, 108) die größere der Axialkräfte auf beide Scheibenräder (94 und 44) aufbringt, und daß die Kraft, die durch die Übersetzungswahlvorrichtung (66) zu der Kraft auf eines (44) der Scheibenräder (94 und 44) addiert oder von ihr subtrahiert wird, proportional zur Höhe der Drehmomente an den entsprechenden Scheibenrädern (94 und 44) so aufrechterhalten wird, daß eine ordnungsmäße Riemenspannung erhalten bleibt.

**Revendications**

1. Mécanisme de réglage de rapport d'une transmission à courroie à rapport variable, dans laquelle chaque poulie (44, 94) du système (10) à courroie et poulie a au moins un organe mobile (42, 90, 92), le système à courroie et poulies a un arbre d'entrée (14) et un arbre de sortie (74), un dispositif (86) à came de sortie, sensible au couple, est disposé entre l'arbre de sortie (74) et un organe mobile (90) d'une première poulie (94) afin qu'une force axiale proportionnelle au couple de sortie soit appliquée à la première poulie pour que la tension de la courroie (96) soit réglée, un dispositif (32) à came d'entrée sensible au couple est disposé entre l'arbre d'entrée (14) et un organe mobile (42) une autre poulie (44) afin qu'une force axiale proportionnelle au couple d'entrée de l'autre poulie (44) soit appliquée pour que la tension de la courroie (96) soit réglée, et un dispositif sélecteur de rapport (66) est destiné à sélectionner les rapports par application de forces axiales s'ajoutant aux forces axiales induites par le couple, aux dispositifs particuliers à came (86 et 32), caractérisé en ce que le dispositif sélecteur de rapport (66) comporte un mécanisme destiné à appliquer une force axiale qui est ajoutée à ou retranchée de la force axiale appliquée à l'autre poulie (44) et en ce qu'un mécanisme d'équilibrage de forces (104, 106, 108) est disposé pour corréler les déplacements axiaux des organes mobiles (42 et 92) des poulies correspondantes (44 et 94) afin que les forces appliquées aux deux poulies (44 et 94) soient équilibrées lorsque le rapport choisi est atteint et lorsque la tension de la courroie (96) est réglée.

2. Mécanisme de réglage de rapport selon la revendication 1, caractérisé en ce que le mécanisme d'équilibrage de forces (104, 106, 108) comporte des bielles de transmission de force, et en ce qu'un ressort (40) précharge et les bielles (104, 106, 108) de transmission de force relient les dispositifs à came de sortie et d'entrée (86 et 32) sensibles au couple afin qu'une force axiale initial soit créée dans le système (10) à courroie et poulies.

3. Mécanisme de réglage de rapport selon la revendication 2, caractérisé en ce que les poulies comportent une poulie d'entrée (44) et une poulie de sortie (94) entre lesquelles le rapport de transmission est déterminé en partie par les forces axiales appliquées à ces poulies, l'arbre d'entrée (14) est entraîné par la poulie d'entrée (44) et l'arbre de sortie (74) est entraîné par la poulie de sortie (94), le dispositif (86) à came de sortie sensible au couple et le dispositif (32) à came d'entrée sensible au couple assurent l'établissement d'une tension dans la courroie (96) au niveau de la poulie de sortie (94) et de la poulie d'entrée (44) respectivement, les bielles de transmission de force (104, 106, 108) appliquent en fait la plus grande des forces axiales aux deux poulies (94 et 44), et la force appliquée par le dispositif sélecteur de rapport (66) qui s'ajoute à la force appliquée à une première (44) des deux poulies (94 et 44) ou en est soustraite, est maintenue proportionnelle aux couples appliqués aux poulies particulières (94 et 44) si bien qu'une tension convenable est maintenue dans la courroie.

Fig. 1

0 128 674

Fig. 2